**Europäisches Patentamt**

**European Patent Office**

**Office européen des brevets**

(19)

(11) Veröffentlichungsnummer: **0 123 250**
**A2**

(12) # EUROPÄISCHE PATENTANMELDUNG

(21) Anmeldenummer: **84104286.4**

(22) Anmeldetag: **16.04.84**

(51) Int. Cl.³: **E 21 D 20/02**

(30) Priorität: **25.04.83 DE 3314874**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Dierichs, Wolfgang, Dr.**
**Im Diepental 11**
**D-4000 Düsseldorf 13(DE)**

(72) Erfinder: **Gierenz, Gerhard, Dr.**
**Dieselstrasse 70**
**D-5650 Solingen 19(DE)**

(72) Erfinder: **Kraus, Gabriella Kraus**
**Ulmenallee 140**
**D-4040 Neuss 21(DE)**

(54) **Verfahren zum Verfüllen von Hohlräumen in mineralischen Werkstoffen unter Verwendung von schmelzbaren Polymerisaten.**

(57) Verfahren zum Verfüllen von Hohlräumen in mineralischen Werkstoffen zwecks Aufnahme von Befestigungs-elementen, wobei man eine warme Schmelze eines gesättig-ten Polyesters, der in der Säurekomponente wenigstens 90 Mol-% Terephthalsäure und/oder Isophthalsäure und in der Alkoholkomponente wenigstens 80 Mol-% eines aliphatischen Diols mit 4 bis 6 Kohlenstoffatomen und gegebenenfalls 1 Ethersauerstoff im Molekül enthält, bei einer Tempera-tur von 110 bis 260°C, vorzugsweise bei 125 bis 230 °C in den Hohlraum einspritzt. Bei der Verarbeitung soll eine Schmelz-viskosität zwischen 50 und 200 Pa.s eingehalten werden. Die Befestigungselemente werden in die noch verformbare Masse eingeführt. Zweckmäßig enthält der Polyester in der Säurekomponente wenigstens 50% Terephthalsäure und Isophthalsäure und in der Diolkomponente im wesentlichen Butandiol-1,4 und/oder Hexandiol-1,6 und/oder Neopentyl-glykol und/oder Diethylenglykol.

Henkelstraße 67

4000 Düsseldorf, den 13. Dez. 1983

0123250
HENKEL KGaA
ZR-FE/Patente

Dr.SchOe/Ge

Patentanmeldung

D 6776 EP

"Verfahren zum Verfüllen von Hohlräumen in mineralischen
Werkstoffen unter Verwendung von schmelzbaren Polymerisaten"

---

Das Verfüllen von Hohlräumen wie Bohrlöchern oder
Rissen in mineralischen Werkstoffen mittels erhärtenden
Kunststoffen ist seit langem bekannt. So sind Systeme
auf Basis von Epoxidharzen und bestimmten aminischen
Härtern gut geeignet , um Bohrlöcher auszufüllen, so
daß sie eingebrachte Verankerungen fest mit ihrer Umgebung verbinden. Häufig wird dabei durch das Einbringen
des Verankerungselements die getrennt gehaltenen
Reaktionskomponenten des Epoxidharzsystems gemischt
und so die chemische Härtungsreaktion ausgelöst.
Auch kann man Risse oder Bohrlöcher mit sogenannten
ungesättigten Polyestern ausfüllen, wobei man sich auch
hier eines Zweikomponentensystems bedient, bei dem der
die Polymerisation auslösende Initiator erst unmittelbar
vor Einbringen in den Hohlraum zugesetzt wird.

Diese zum Stand der Technik gehörenden Verfahren sind
bezüglich ihrer Vorbereitung und der Durchführung sehr
aufwendig. Sie kommen daher nur in solchen Fällen in
Betracht, wo aufgrund des Objektes ein hoher Aufwand
gerechtfertigt ist.

. . .

0123250
HENKEL KGaA
ZR-FE/Patente

Ein    relativ hoher Aufwand wird auch beim Einkleben von Befestigungselementen wie Dübel mittels üblicher Schmelzkleber erforderlich. So muß beispielsweise gemäß DE-OS 23 36 835 der flüssige Schmelzkleber durch eine Einfüllöffnung im Befestigungselement oder im Ringteil in das Bohrloch eingebracht werden. Einen ähnlichen Aufwand erfordert das Verfahren nach DE-OS 19 37 718 zum Festlegen eines Befestigungsmittels in ein Dübelloch mittels einer plastischen aushärtbaren Einbettmasse, wobei die Befestigungsmittel in Gestalt von Schraubbolzen oder Muttern in einem Spritzdüsenkopf gehaltert werden und daß nach Einfügen in das Dübelloch die Einbettmasse durch Öffnungen des Düsenkopfes benachbart zum Befestigungsmittel in das Dübelloch eingespritzt wird.

Aufgabe der vorliegenden Erfindung war es daher, eine aus der Schmelze applizierbare  und bei Raumtemperatur erstarrende  Masse vorzuschlagen, mit der Hohlräume mit einer bei Raumtemperatur und darüber festen rißfreien Masse ausgefüllt werden können. Die Applikation sollte mit einer Schmelzkleberpistole erfolgen und die einzusetzenden Elemente in die erstarrende Masse eingedrückt werden können. Die Schmelzmasse sollte in ihren Eigenschaften so abgestimmt sein, daß man auch ohne Verwendung von Dübeln Schrauben und ähnlich  gestaltete Befestigungselemente wie mit Gewinde versehene Metallkörper einbringen kann. Versuche mit Schmelzmassen und auch Schmelzklebern, wie sie für die verschiedensten Zwecke angeboten werden, haben jedoch zu keinem Erfolg geführt. Es hat sich herausgestellt, daß entweder zu wenig Kohäsion, das heißt innere Festigkeit vorhanden war, um eine sichere und dauerhafte Befestigung eines eingebrachten Elementes zu bewirken oder aber andererseits die Adhäsion der Schmelzmasse an dem mineralischen Werkstoff zu ungenügend war. So konnte oft bei einfachen Bohrlöchern das Befestigungselement mit der Schmelzmasse leicht wieder herausgezogen werden.

...

0123250
HENKEL KGaA
ZR-FE/Patente

Bei diesen im Sinne der Erfindung nicht brauchbaren
Massen handelt es sich um Polymerisate auf Basis von
Vinylacetat und Vinylacetat mit Ethylen. Auch schmelzbare
Massen auf Basis von Polypropylen oder von üblichen Polyamiden, gegebenenfalls auch unter Zusätzen von üblichen
für Schmelzmassen an sich sehr brauchbaren Harzen, brachten
keine Lösung des anstehenden Problemes.

Auch  Schmelzmassen auf Basis von Polyestern aus zwei
Polyesterblöcken - einem sogenannten "harten" und einem
"weichen" -, die man zusammen mit mineralischen
Füllstoffen wie Glasfasern sowie hohlen silikatischen
Mikrogranulaten verarbeiten kann, waren nicht problemlösend. Abgesehen vom hohen Aufwand zur Herstellung
derartiger Systeme und der nur sehr begrenzten Möglichkeit, kraftschlüssige Verbindungen herzustellen, müssen
die diversen aus wenigstens zwei Polyesterblöcken bestehenden Schmelzmassen sorgfältig mit den weiteren
wesentlichen Komponenten abgestimmt sein, um wirken zu
können. So  werden dann diese Heißschmelzkleber auch als
Kleber, d.h. für Anwendung in dünner Schicht, oder
zum Ausfüllen von Hohlräumen in Karosserien empfohlen,
wobei ihre Wärmebeständigkeit und Schleifbarkeit als
Vorbereitung zum späteren Lackieren im Vordergrund stehen.

Die erfindungsgemäßen Massen sollten sowohl an üblichen
mineralischen Werkstoffen gute Haftung zeigen als auch
eine kraftschlüssige Verbindung, insbesondere bei eingebetteten Metallteilen, bewirken. Schließlich galt es,
solche schmelzbaren Massen auszuwählen, die während hinreichend langer Zeit ihre Eigenschaften in der Schmelze
nicht verlieren, das heißt praktisch keinen Viskositätsverlust zeigen und schließlich infolge einer hinreichend

...

langen offenen Zeit noch verformbar sind zur Aufnahme der Befestigungselemente.

Gegenstand der Erfindung ist ein Verfahren zum Verfüllen von Hohlräumen in mineralischen Werkstoffen, welches dadurch gekennzeichnet ist, daß man eine Schmelze eines gesättigten Polyesters, der

a) in der Säurekomponente wenigstens 90 Mol-% Terephthalsäure und/oder Isophthalsäure und

b) in der Alkoholkomponente wenigstens 80 Mol-% eines aliphatischen Diols mit 4 bis 6 Kohlenstoffatomen und gegebenenfalls 1 Ethersauerstoff im Molekül enthält, bei

c) einer Temperatur von 110 bis 260 $^{\circ}$C, vorzugsweise 125 bis 230 $^{\circ}$C, in den Hohlraum einspritzt, wobei

d) bei der Verarbeitungstemperatur eine Schmelzviskosität zwischen 50 und 200 Pa·s eingehalten wird und

e) dann die Befestigungselemente in die noch verformbare Masse einführt.

Bevorzugte Polyester enthalten Terephthalsäure und Isophthalsäure im Molverhältnis zwischen 8 : 2 und 4 : 6.

Neben den gesamten Phthalsäuren können auch andere aromatische Carbonsäuren wie etwa die Orthophthalsäure sowie Naphthalindicarbonsäure mitverwendet werden, jedoch soll ihre Menge 10 Mol-% nicht übersteigen. Der Einsatz von geringen Mengen, in der Regel nicht mehr als 5 Mol-% an aliphatischen Dicarbonsäuren, insbesondere relativ kurzkettigen Dicarbonsäuren wie Bernsteinsäure und/oder Adipinsäure, ist nicht ausgeschlossen.

Als Alkoholkomponente für die geeigneten Polyester kommen in erster Linie Butandiol-1,4 und Hexandiol-1,6, Neopentylglykol und Diethylenglykol in Frage.

...

01 23 2 50
HENKEL KGaA
ZR-FE/Patente

Auch ist es möglich, neben den bevorzugten vorgenannten Diolen bis zu etwa 20 Mol-%, vorzugsweise bis zu 10 Mol-% Diole wie Ethandiol, Octandiol-1,8, Cyclohexandiol sowie Bis-hydroxymethyl-cyclohexan einzusetzen. Voraussetzung für die Verwendung derartiger Alkohole ist, daß dadurch die notwendigen anderen Parameter für den erfindungsgemäßen Zweck der Verwendung als schmelzbare Füllmassen – nämlich eine geeignete Schmelzviskosität zwischen 50 und 200 Pa·s zu geben – bei der Applikationstemperatur eingehalten werden.

Bei den vorstehend beschriebenen Polyestern handelt es sich um an sich bekannte Verbindungen, die aber bisher für andere Zwecke empfohlen wurden, zum Beispiel zu Beschichtungen in der Schuhindustrie oder Textilindustrie sowie als Kaschierungen für Verpackungen und dergleichen mehr. Bekanntlich stellt man an derartige Rohstoffe völlig andere Anforderungen als an Massen, die zum Verfüllen von Hohlräumen in mineralischen Werkstoffen geeignet sind.

Geeignete gesättigte Polyester haben eine Molmasse, die zwischen etwa 16 000 und 28 000 liegt. Ihre Dichte soll zwischen etwa 1,2 und 1,3 $g/cm^3$ liegen.

. . .

0123250
HENKEL KGaA
ZR-FE/Patente

Das erfindungsgemäße Verfahren eignet sich zum Verfüllen von Hohlräumen in mineralischen Werkstoffen wie Ziegeln oder auch Beton. In die Massen können, solange sie noch verformbar sind, Halterungselemente wie insbesondere Schrauben eingebracht werden. Die innere Festigkeit sowie die Verbindung mit den mineralischen Werkstoffen ist so hoch, daß beim Versuch des Herausreißens eingebrachter Befestigungselemente häufig ein Reißen im mineralischen Werkstoff eintritt. Dies wird insbesondere bei Klinker- und Hintermauersteinen wie auch bei Kalksandstein beobachtet.

Neben Löchern können natürlich auch andere Hohlräume wie Risse verfüllt werden, wobei auch hier Elemente eingebettet werden können. Die Polyester lassen sich insbesondere nach Aufrauhen mit üblichen Dispersionsfarben überziehen.

Zur Konfektionierung oder für bestimmte Verwendungszwecke können den schmelzbaren Massen noch Alterungs- und Wärmestabilisatoren zugesetzt werden. Auch ist es möglich, insbesondere zur Kenntlichmachung, wärmestabile Farbstoffe, die sich vorzugsweise in der Schmelze lösen, den Polyestern zuzusetzen.

Das Einbringen der geschmolzenen Polyestermasse kann in an sich bekannter Weise mit Auftragsgeräten erfolgen, die auf den speziellen Zweck abgestimmt sind und ein Verfüllen des Bohrlochs von der tiefsten Stelle her ermöglichen.

...

**0123250**
**HENKEL KGaA**
ZR-FE/Patente

## B e i s p i e l e

Zum Verfüllen von Bohrlöchern in verschiedenen mineralischen Baumaterialien wurden die folgenden Polyester
verwendet, wobei in der folgenden Tabelle 1 in Abhängigkeit von der laufenden Nummer des Beispiels, die Mol-% an
Carbonsäure- und Diolkomponente, jeweils bezogen auf die
Gesamtmenge an Säure bzw. Alkohol, angegeben wurden.
Es folgen die Molmassen und die Fließpunkte.

### Tabelle 1

| Bei-spiel Nr. | Säure Komp. | Mol % | Diol-komp. | Mol % | Molmasse[+] g/Mol | Fließ-punkt[++] |
|---|---|---|---|---|---|---|
| 1 | Terephthals. Iso-       " | 50 50 | 1,4-Butan- Diethylen- | 98 2 | 23 000 | 145 $^{o}$C |
| 2 | Terephthals. Iso-       " | 74 26 | 1,4-Butan- Neopentyl- | 98 2 | 26 000 | 175 $^{o}$C |
| 3 | Terephthals. Iso-       " | 71 29 | 1,4-Butan- 1,6-Hexan- | 30 70 | 18.000 | 115 $^{o}$C |

+ Zahlenmittel      ++ DIN 1995

Zunächst wurden in die verschiedenen Bausteine Löcher von
8 mm Durchmesser und einer Tiefe von 45 mm gebohrt und
mit Luft ausgeblasen. Anschließend wurden mit Schmelzen
der Polyester von 235 $^{o}$C (Nr. 1 und 2) bzw. 215 $^{o}$C (Nr.3)
diese Löcher verfüllt. Vor dem Erstarren wurden in die

. . .

warmen Massen Eisenschrauben (5 x 60 mm) eingedrückt, so daß sie noch etwa 15 mm aus der verfüllten Bohrung herausragten. Nach 1 bis 2 Stunden wurden mit einer handelsüblichen elektronischen Zugprüfmaschine (Vorschub 12 mm/sec) die Auszugsfestigkeiten gemessen. In der folgenden Tabelle 2 sind in Abhängigkeit von eingesetztem Steinmaterial die gefundenen Auszugswerte bis zum Lösen der Verbindung N für die drei verwendeten Schmelzmassen angegeben.

## Tabelle 2

| Steinmaterial | Schmelzmasse nach | | |
|---|---|---|---|
| | Nr. 1 | Nr. 2 | Nr. 3 |
| Klinker | 3000 | 4000 | 5000 |
| Hintermauerstein | 2000 | 2200 | 1400 |
| Kalksandstein | 3000 | 3000 | 2300 |
| Schwemmstein | 1000 | 1300 | 1400 |
| Gasbeton | 900 | 300 | 1400 |

Zum Vergleich wurden in die Bohrlöcher handelsübliche Kunststoffdübel ("Fischer S8") eingesetzt und die Schrauben mit einem Schraubendreher bis zur angegebenen Tiefe (15 mm herausragen) eingesetzt. Es wurde bei Ausziehen folgende Werte gefunden.
Klinker: 2700 N, Hintermauerstein 3500 N, Kalksandstein 3500 N, Schwemmstein 1500 N, Gasbeton 800 N.

...

0123250
HENKEL KGaA
ZR-FE/Patente

Patentansprüche

1. Verfahren zum Verfüllen von Hohlräumen in mineralischen Werkstoffen zwecks Aufnahme von Befestigungselementen, welches dadurch gekennzeichnet ist, daß
man eine warme Schmelze eines gesättigten Polyesters,
der

a) in der Säurekomponente wenigstens 90 Mol-%
Terephthalsäure und/oder Isophthalsäure und

b) in der Alkoholkomponente wenigstens 80 Mol-% eines
aliphatischen Diols mit 4 bis 6 Kohlenstoffatomen
und gegebenenfalls 1 Ethersauerstoff im Molekül
enthält, bei

c) einer Temperatur von 110 bis 260 $^{\circ}$C, vorzugsweise
bei 125 bis 230 $^{\circ}$C in den Hohlraum einspritzt,
wobei

d) bei der Verarbeitungstemperatur eine
Schmelzviskosität zwischen 50 und 200 Pa·s
eingehalten wird und

e) dann die Befestigungselemente in die noch verformbare Masse einführt.

2. Verfahren nach Anspruch 1, dadurch gekennzeichnet, daß
man solche Polyester verwendet, die in der Säurekomponente wenigstens 50 % Terephthalsäure und Isophthalsäure enthalten, wobei ein höherer Gehalt an Terephthalsäure bevorzugt ist und die Diolkomponente
im wesentlichen aus Butandiol-1,4 und/oder Hexandiol-
1,6 und/oder Neopentylglykol und/oder Diethylenglykol
besteht.

...

0123250
HENKEL KGaA
ZR-FE/Patente

3. Verfahren nach Ansprüchen 1 und 2, dadurch gekennzeichnet, daß man mit den schmelzbaren Massen solche
   Hohlräume, insbesondere Bohrlöcher ausfüllt, die
   zur Aufnahme von Halterungselementen bestimmt sind.

4. Verfahren nach Ansprüchen 1 bis 3, dadurch gekennzeichnet, daß man das Verfahren zum Befestigen
   von Holzschrauben in Mauerwerk und/oder Beton
   benutzt.